# EUROPEAN PATENT APPLICATION

(11) **EP 4 019 580 A1**
(43) Date of publication of application: **29.06.2022**
(21) Application number: 20217440.5
(22) Date of filing: 28.12.2020
(51) Int. Cl.: C08K 5/13, C08K 3/016, C08K 3/16, C08K 5/00, C08K 3/00, C08L 27/12, C08L 27/18, C08L 27/22

(54) **REDUCTION OF FLUORINATED ACID IN FLUOROPOLYMERS**

(71) Applicant: 3M Innovative Properties Company, Saint Paul, MN 55133-3427 (US)
(72) Inventor: Hintzer, Klaus, 84556 Kastl (DE); Koenigsmann, Herbert, 84508 Burgkirchen (DE); Dadalas, Michael, 84489 Burghausen (DE); Mitchell, Michael (Haley), Woodbury, Minnesota MN 55125 (US); Fukushi, Tatsuo (Todd), Woodbury, Minnesota MN 55125 (US); Vowinkel, Steffen, 84453 Mühldorf am Inn (DE)
(74) Representative: Hettstedt, Stephan

(57) **Abstract**

The present disclosure provides composition comprising
(a) at least one perfluorinated polymer;
(b) at least 0.5 wt.-% of at least one radical scavenger selected from (i) organic radical scavengers and (ii) inorganic radical scavengers selected from iodides or bromides of alkalines or earth alkalines, based on the total weight of the composition.

## Description

### Field

The present disclosure relates to a composition comprising a least one perfluorinated polymer and at least one radical scavenger. Further, the present disclosure relates to a method for processing a perfluorinate composition, wherein a radical scavenger is used.

### Background

Fluorinated compositions have been used in a wide variety of applications including fluorochemicals for: water-proofing materials, fire-fighting foams for electrical and grease fires, semi-conductor etching, and lubricants; and fluoropolymers for: hoses, gaskets, seals, coatings, and films. Reasons for such widespread use of fluorinated compositions include their favorable physical properties, which include chemical inertness, low coefficients of friction, low polarizabilities (i.e., fluorophilicity), and thermo stability.

However, during manufacture and in particular during processing of fluorinated or perfluorinated polymer composition, there is the danger of perfluorinated carboxylic acids (PFCAs) being generated and released. This is in particular true for processing methods involving increased temperature or where the polymer compositions experience high shear forces. High shear processes are for example known from compounding or injection molding of crystalline fluoropolymers. PFCAs are considered toxic, and their release or use is increasingly prohibited by national or regional legislation. For instance, under REACH, perfluorooctane acid is now prohibited in the EU.

Accordingly, there exists a desire in the art to provide cost-efficient, effective and environmentally benign compositions and methods for the reduction or avoidance of generation of perfluorocarboxylic acid during processing of perfluorinated polymers, in particular where shear forces are invoiced.

### Summary

The present disclosure provides composition comprising
(a) at least one perfluorinated polymer;
(b) at least 0.5 wt.-% of at least one radical scavenger selected from (i) organic radical scavengers and (ii) inorganic radical scavengers selected from iodides or bromides of alkalines or earth alkalines, based on the total weight of the composition.

In addition, the present disclosure provides a method for processing a perfluorinate composition, comprising the following steps:
I. adding at least one radical scavenger selected from (i) organic radical scavengers and (ii) inorganic radical scavengers selected from iodides or bromides of alkalines or earth alkalines to a perfluorinated polymer to form a stabilized composition; and
II. processing the stabilized composition,
wherein the total amount of C3 to C14 perfluorinated carboxylic acid in the processed stabilized composition is no greater than 500 ppb.

### Detailed Description

Before any embodiments of this disclosure are explained in detail, it is to be understood that the disclosure is not limited in its application to the details of construction and the arrangement of components set forth in the following description. The invention is capable of other embodiments and of being practiced or of being carried out in various ways. As used herein, the term "a", "an", and "the" are used interchangeably and mean one or more; and "and/or" is used to indicate one or both stated cases may occur, for example A and/or B includes, (A and B) and (A or B). Also herein, recitation of ranges by endpoints includes all numbers subsumed within that range (e.g., 1 to 10 includes 1.4, 1.9, 2.33, 5.75, 9.98, etc.). Also herein, recitation of "at least one" includes all numbers of one and greater (e.g., at least 2, at least 4, at least 6, at least 8, at least 10, at least 25, at least 50, at least 100, etc.). Also, it is to be understood that the phraseology and terminology used herein is for the purpose of description and should not be regarded as limiting. Contrary to the use of "consisting", which is meant to be limiting, the use of "including," "containing", "comprising," or "having" and variations thereof is meant to be not limiting and to encompass the items listed thereafter as well as additional items. It should be noted, however, that the use of "comprising" herein also encompasses the term of "consisting of", i.e. the use of "consisting of" in the sense of "consisting only of" is not excluded in the present disclosure per se.

Amounts of ingredients of a composition may be indicated by % by weight (or "% wt". or "wt.-%") unless specified otherwise. The amounts of all ingredients gives 100 % wt unless specified otherwise. If the amounts of ingredients are identified by % mole the amount of all ingredients gives 100% mole unless specified otherwise.

Unless explicitly indicated, all preferred ranges and embodiments may be combined freely.

Parameters as described herein may be determined as described in detail in the experimental section.

The present disclosure provides a composition comprising
(a) at least one perfluorinated polymer;
(b) at least 0.5 wt.-% of at least one radical scavenger selected from (i) organic radical scavengers and (ii) inorganic radical scavengers selected from iodides or bromides of alkalines or earth alkalines, based on the total weight of the composition.

It was found that adding 0.5 wt.-% of at one radical scavenger selected from (i) organic radical scavengers and (ii) inorganic radical scavengers selected from iodides or bromides of alkalines or earth alkalines, based on the total weight of the composition, it became possible to avoid the generation and/or reduce the amount of perfluorinated carboxylic acids during typical manufacturing or processing operations of perfluorinated polymers. This was in particular true for such processes where the perfluorinated polymers experience high shear forces. For instance, this applies for compounding of crystalline perfluorinated polymers by injection molding or extruding. Without wanting to being bound by theory, it is believed that oftentimes, PFAs are being generated in high-shear compounding or manufacturing applications by generation of radicals through chain-scission of the perfluorinated polymers due to high shear inflicted on the polymer chains, and subsequent oxidation of the radicals, yielding perfluorinated carboxylic acids (PFAs). Thus, compounding a certain amount of radical scavengers into perfluorinated polymer compositions as performed according to the present disclosure, may avoid the generation of PFAs and/or reduce their amount during compounding and manufacturing operations of perfluorinated polymers in an effective and benign way.

Regarding the perfluorinated polymer as used herein, there is no limitation to its composition or mixture with other polymers. Preferably, the at least one perfluorinated polymer comprises at least 90 % fluorine atoms on its backbone. The at least one perfluorinated polymer may be selected from perfluorinated elastomers, perfluorinated thermoplasts, and perfluorinated ionomers.

In particular, the perfluorinated polymer may be selected from trifluorovinyl ether (TFE), perfluoroalkoxyvinylethers (PAVE), perfluoroalkoxyallylethers (PAAE), and any combinations and mixtures thereof.

In the case that the at least one perfluorinated polymer is an elastomer, it is preferably selected from perfluorinated rubbers.

In a preferred embodiment, the fluoropolymer is a curable (cross-linkable) fluoroelastomer. It is contemplated that the method can be applied to all fluoroelastomers known in the art but, preferably, the fluoroelastomer is essentially free of ionic end groups. By the term 'essentially free of ionic end groups' is meant that the fluoroelastomer is free of ionic end groups or contains ionic end groups in such an amount that the absorbance ratio determined by calculating the integrated peak intensity within the range of 1840 cm⁻¹ - 1620 cm⁻¹ to the integrated peak intensity in the range 2740 cm⁻¹ - 2220 cm⁻¹ in a Fourier-transform infrared spectrum of the fluoropolymer is less than 0.1. This absorbance ratio is usually used in the art to indicate the level of carboxylic end groups (US 6,114,452) but can be used as a general measure of end groups because in the aqueous polymerization reaction carboxylic acid end groups are only formed or are formed predominantly.

Elastomers typically are amorphous. They may have a glass-transition temperature (Tg) of less than 26°C, or less than 20°C, or less than 0°C. For example, the fluoroelastomers for use in the present disclosure may have a Tg within the range of from about -160°C to about +19°C, for example a Tg between -40°C and up to 12°C, or between -50°C and +15°C, or between -55°C and +19°C. In some embodiments, the fluoroelastomers have a glass-transition temperature between -160°C and -40°C. The fluoroelastomers may typically have a Mooney viscosity (ML 1+10 at 121°C) of from about 2 to about 150, for example from 10 to 100, or from 20 to 70. The curable fluoropolymers may typically have an onset of cure (Ts2) of less than 1 minute at 180°C.

The elastomers are typically prepared by an aqueous emulsion polymerization. Preferably the elastomer is prepared by polymerization of tetrafluoroethene (TFE) with one or more perfluorinated unsaturated ethers and mixtures thereof and, optionally, one or more cure-site monomers selected from monomers, preferably fluorinated or perfluorinated monomers, having one or more iodine atoms or one or more nitrile groups. The elastomers may further comprise units derived from optional unsaturated olefinic comonomers, referred to herein as "optional comonomers". Examples for such optional comonomers include fluorinated monomers selected from perfluorinated C₃-C₈ olefins, in particular, hexafluoropropene (HFP). Examples of partially fluorinated comonomers include vinylidene fluoride (VDF), vinyl fluoride (VF), chlorotrifluoroethene (CTFE). Examples of non-fluorinated comonomers include ethene (E) and propene (P). Examples of perfluorinated unsaturated ether monomers that may be used include those corresponding to the formula (I):

CF₂=CF-(CF₂)ₙ-O-Rf (I)

wherein Rf represents a perfluorinated aliphatic group that may contain one or more oxygen atoms and n is either 0 or 1. In case n is 0 the ethers are referred to as vinyl ethers (perfluorinated alkyl vinyl ethers or PAVEs). When n is 1 the ethers are referred to as allyl ethers (perfluorinated alkyl allyl ethers or PAAEs). Preferably, Rf corresponds to

(Rf'O)ₙ(R"fO)ₘR"'f (II)

wherein R'f and R"f are different linear or branched perfluoroalkylene groups of 2-6 carbon atoms, m and n are independently 0-10, and R"'f is a perfluoroalkyl group of 1-6 carbon atoms.

While the methods described herein may be used for any elastomers, they may be most useful for elastomers containing perfluoro vinyl ether comonomer units, i.e. ethers according to formula (I) with n being 0, and in particular those where the residue Rf has 1, more than 1, preferably more than 2 carbon atoms, i.e. at least 3 carbon atoms, and in particular contains a propyl residue or one or more propylene units, preferably in vicinity to the ether oxygen. Particular examples include but are not limited to perfluoro(2-propoxypropyl vinyl) ether (PPVE-2), perfluoro(methyl vinyl) ether (PMVE), perfluoro(3-methoxy-n-propyl vinyl) ether, perfluoro(ethyl vinyl ether) (PEVE), perfluoro(2-methoxyethyl vinyl) ether, perfluoro(n-propyl vinyl) ether (PPVE-1) and F₃C-(CF₂)₂-O-CF(CF₃)-CF₂-O-CF(CF₃)-CF₂-O-CF=CF₂.

In a preferred embodiment the fluoropolymer is a curable fluoroelastomer containing one or more cure-sites containing nitrile groups and/or iodine or bromine groups and wherein the fluoroelastomer further contains units derived from one or more unsaturated perfluorinated ethers selected from the general formula:

Rf-O-CF=CF₂

wherein Rf represents a perfluoroalkyl residue containing 1, 2 or at least 3 carbon atoms which may be interrupted once or more than once by an oxygen atom. Therefore, in a preferred embodiment the fluoroelastomers contain units derived from TFE and one or more of the following comonomers: perfluoro(2-propoxypropyl vinyl) ether (PPVE-2), perfluoro(methyl vinyl) ether (PMVE), perfluoro(3-methoxy-n-propyl vinyl) ether, perfluoro(ethyl vinyl ether) (PEVE), perfluoro(2-methoxy-ethyl vinyl) ether, perfluoro(n-propyl vinyl) ether (PPVE-1) and F₃C-(CF₂)₂-O-CF(CF₃)-CF₂-O-CF(CF₃)-CF₂-O-CF=CF₂ and combinations thereof. Further examples of suitable unsaturated ethers include but are not limited to the vinyl ethers described in European patent application EP 1,997,795 B1.

Preferably, the molar ratio of units derived from TFE comonomer units to comonomer units derived from the unsaturated ethers corresponding to formula (I) described above may be, for example, from 1 : 1 to 4 : 1, wherein the unsaturated ethers may be used as single compounds or as combinations of two or more of the unsaturated ethers. Typical compositions comprise from 44-62 wt.% TFE and 38-56 wt.% PMVE and from 0-10% wt. bromine, iodine and/or nitrile functionalities containing cure site monomers and from 0-10% wt. of other comonomers or modifiers with the amount of ingredients being selected such that the total amount is 100% wt.. Other typical compositions comprise from about 22-30 wt.% TFE, 30-38 wt.% VDF, 34-42 wt.% HFP and from 0 -10% wt. bromine, iodine and/or nitrile functionalities containing cure site monomers and from 0-10% wt. of other comonomers or modifiers with the amount of ingredients being selected such that the total amount is 100% wt.

Preferably the elastomers are copolymers and comprise predominantly or exclusively repeating units derived from TFE and the above unsaturated ether comonomers or other comonomers, and optionally units derived from the optional comonomers as described above, and/or cure site comonomers as will be described below.

In one example of a method of making elastomers the polymerization is initiated with an initiator system selected from a combination of a fluoroaliphatic sulfinate and an oxidizing agent capable of oxidizing the sulfinate to a sulfonyl radical and/or a combination of a free radical initiator and a chloride salt. The resulting fluoropolymer is essentially free of ionic end groups. Example of oxidizing agents include free radical initiators, e.g. a persulfate, a permanganic acid or a salt thereof such as potassium permanganate. Chloride salt such as a chloride salt of the formula: M'CI, wherein M' represents a mono- or multi-valent cation and n corresponds to the valence of the cation. Suitable cations M' include organic and inorganic cations, preferably ammonium. Examples of ammonium chloride salts include tetraalkyl ammonium chlorides such as tetrabutyl ammonium chloride as well as NH₄Cl. Generally, by increasing the amount of chloride salt, the number of ionic end groups reduces. Generally, the amount of chloride salt is selected such that the molar ratio of chloride ions to initiator (e.g. permanganate) is between 1 : 0.1 and 0.1 : 10, preferably between 1: 0.5 and 0.1 : 5.

An alternative method to obtain a fluoropolymer essentially free of ionic end groups involves the use of a combination of a fluoroaliphatic sulfinate, preferably a perfluoroaliphatic sulfinate and an oxidizing agent capable of oxidizing the sulfinate to a sulfonyl radical as disclosed in US 5,285,002. Suitable oxidizing agents include for example a persulfate such as ammonium persulfate.

The fluoroaliphatic sulfinate typically will correspond to the following formula: R_{f}SO₂M. wherein R_{f} represents a monovalent fluoroaliphatic radical having, for example, from 1 to 20 carbon atoms, preferably 4 to 10 carbon atoms, M represents a hydrogen atom or cation with valence x, which is 1 to 2, and is preferably 1. Examples of cations include ammonium, sodium and potassium cations.

Other methods of producing fluoropolymers may be used, for example those without using any fluorinated emulsifiers, for example those described in European Patent Application No EP 2 601 226 A1 or polymerizations with organic peroxides as known in the art, for example using ammonium peroxodisulfates or combinations of organic and inorganic oxidizing agents.

The amount of initiator employed in an aqueous emulsion polymerization is typically between 0.01 and 2 % by weight, preferably between 0.03 and 1 % by weight based on the total weight of the polymerization mixture. The full amount of initiator may be added at the start of the polymerization or the initiator can be added to the polymerization in a continuous way during the polymerization until a conversion of 70 to 80% is achieved. One can also add part of the initiator at the start and the remainder in one or separate additional portions during the polymerization.

Additionally to generate polymers with a low amount of ionic endgroups, perfluoro peresters can be used as initiators.

The aqueous emulsion polymerization process is generally conducted in the commonly known manner. Preferred polymerization temperatures are 10°C to 100°C, preferably 30°C to 80°C and a pressure of 4 to 30 bar, in particular 6 to 18 bar.

The aqueous emulsion polymerization system may further comprise other materials, such as buffers and, if desired, complex-formers or chain-transfer agents. The aqueous emulsion polymerization may also include a fluorinated surfactant. Preferably, no perfluoroalkanoic sulphonic or carboxylic acid or salt thereof is used, but one or more "alternative fluorinated emulsifiers" as will be described in greater detail below. Typically, the total amount of alternative fluorinated emulsifiers used in the aqueous emulsion polymerization may be between 0.1 % by weight and 5% by weight based on the weight of fluoropolymer to be produced.

In order to introduce cure sites to allow for cross-linking (curing) of the polymer along the chain, the copolymerization of the basic monomers of the fluoropolymer may be carried out with one or more cure-site monomer (see for instance US 4,745,165; US 4,831,085 and US 4,214,060). The cure sites react with a curing agent or a curing system by which the polymers are cross-linked (cured). Such curing agents or curing systems are well known in the art. The curable elastomers may, for example, be peroxide curable and contain cure sites that are reactive to a peroxide curing system. The cure sites may be introduced into the polymer by using cure site monomers, i.e. functional monomers as will be described below, functional chain-transfer agents and starter molecules. Instead or in addition to peroxide-curable cure sites, the fluoroelastomers may contain cure sites that are reactive to other curing systems. An example widely used in the art include cure sites containing nitrile or nitrile groups. Such cure sites are reactive, for example, to curing systems that generate ammonia, as well as peroxide curing agents.

Suitable cure sites for a peroxide cure system comprise iodine atoms. Iodine-containing cure site end groups can be introduced by using an iodine-containing chain transfer agent in the polymerization. Iodine-containing chain transfer agents will be described below in greater detail. In addition, halogenated redox systems as described below may be used to introduce iodine end groups.

The curable fluoroelastomers may also contain cure sites in the back bone or as pending groups in addition or as an alternative to the cure sites at a terminal position. Cure sites within the polymer backbone can be introduced by using a suitable cure-site monomer. Cure site monomers are monomers containing one or more functional groups that can act as cure sites or, less preferred, contain a precursor that can be converted into a cure site.

In addition to iodine cure sites, other cure sites may also be present, for example Br-containing cure sites or cure sites containing one or more nitrile groups. Br-containing cure sites may be introduced by Br-containing cure-site monomers. Nitrile-containing cure sites are typically introduced by cure site monomers containing a nitrile group.

Examples of cure-site comonomers include for instance:
(a) bromo- or iodo-(per)fluoroalkyl (per)fluorovinyl ethers, for example including those having the formula:

   ZRf-O-CX=CX₂

   wherein each X may be the same or different and represents H or F, Z is Br or I, Rf is a C1-C12 (per)fluoroalkylene, optionally containing chlorine and/or ether oxygen atoms. Suitable examples include ZCF₂-O-CF=CF₂, ZCF₂CF₂-O-CF=CF₂, ZCF₂CF₂CF₂-O-CF=CF₂, CF₃CFZCF₂-O-CF=CF₂ or ZCF₂CF₂-O-CF₂CF₂CF₂-O-CF=CF₂ wherein Z represents Br or I; and (e.g. CF₂=CF-O-(CF₂)ₙ-O-CF₂-CF₂l).
(b) bromo- or iodo-perfluoroolefins such as those having the formula:

   Z'-(Rf)ᵣ-CX=CX₂

   wherein each X independently represents H or F, Z' is Br or I, Rf is a C₁-C₁₂ perfluoroalkylene, optionally containing chlorine atoms and r is 0 or 1; and
(c) non-fluorinated bromo and iodo-olefins such as vinyl bromide, vinyl iodide, 4-bromo-1-butene and 4-iodo-1-butene.

Specific examples include but are not limited to compounds according to (b) wherein X is H, for example compounds with X being H and Rf being a C1 to C3 perfluoroalkylene. Particular examples include: bromo- or iodo-trifluoroethene, 4-bromo-perfluorobut-1-ene, 4-iodo-perfluorobut-1-ene, or bromo- or iodo-fluoroolefins such as 1-iodo-2,2-difluroroethene, 1-bromo-2,2-difluoroethene, 4-iodo-3,3,4,4,-tetrafluorobut-1-ene and 4-bromo-3,3,4,4-tetrafluorobut-1-ene; 6-iodo-3,3,4,4,5,5,6,6-octafluorohex-1-ene.

Typically, the amount of iodine or bromine or their combination in the fluoropolymer is between 0.001 and 5%, preferably between 0.01 and 2.5%, or 0.1 to 1% or 0.2 to 0.6% by weight with respect to the total weight of the fluoropolymer. In one embodiment the curable fluoropolymers contain between 0.001 and 5%, preferably between 0.01 and 2.5%, or between 0.1 and 1%, more preferably between 0.2 and 0.6% by weight of iodine based on the total weight of the fluoropolymer.

In addition to the I- and/or Br-cure sites described above, or as an alternative, the curable fluoropolymers may contain nitrile-containing cure sites. Nitrile-containing cure sites may be reactive to other cure systems for example, but not limited to, bisphenol curing systems, peroxide curing systems or triazine curing systems. Examples of nitrile containing cure site monomers correspond to the following formulae:

CF₂=CF-CF₂-O-Rf-CN;

CF₂=CFO(CF₂)ᵣCN;

CF₂=CFO[CF₂CF(CF₃)O]ₚ(CF₂)ᵥOCF (CF₃)CN;

CF₂=CF[OCF₂CF (CF₃)]ₖO(CF₂)ᵤCN;

wherein, r represents an integer of 2 to 12; p represents an integer of 0 to 4; k represents 1 or 2; v represents an integer of 0 to 6; u represents an integer of 1 to 6, Rf is a perfluoroalkylene or a bivalent perfluoroether group. Specific examples of nitrile containing fluorinated monomers include but are not limited to perfluoro(8-cyano-5-methyl-3,6-dioxa-1-octene), CF₂=CFO(CF₂)₅CN, and CF₂=CFO(CF₂)₃OCF(CF₃)CN.

The amount of units derived from cure site comonomers depends on the desired cross-linking density. Cure site monomers may be used in amounts of 0 to 10 % by weight, typically in amounts of less than 10% by weight or even less than 5% by weight based on the total amount of comonomers used.

The fluoroelastomers may also be of dual cure type. They may also contain different cure sites that are reactive to different curing systems.

At the end of the aqueous emulsion polymerization process, an aqueous dispersion of the fluoropolymer is obtained. Usually, the average particle diameter as determined by dynamic light scattering methods is not more than 400 nm, typically in the range of 10 to 400 nm, preferably 40 to 250 nm

When the at least one perfluorinated polymer as described herein is a perfluorinated thermoplast, it is preferably selected from perfluoroalkoxyalkanes (PFA), tetrafluoroethylene-hexyfluoropropylene (FEP), polytetrafluoroethylene (PTFE) optionally modified with vinyl ethers.

The PTFE of the present disclosure is a thermoplastic in that it can be remelted; however, because of its viscoelastic properties, the PTFE can generally not be processed by the traditional melt processing methods and therefore is sometimes referred to as non-melt processible. In general, this means that the melt viscosity of the PTFE is greater than 10¹⁰ Pascal-seconds. The PTFE of the present disclosure may have an MFI of 0g/10 min at 380°C and a load of 21.6 kg (according to ASTM D 1238-88). The PTFE of the present disclosure is typically highly crystalline. The PTFE may have an ultra high molecular weight as expressed by an SSG density of less than 2.160 g/cm³.

Fluorinated polyethers suitable for production of PTFE are preferably selected such that they are non-telogenic (i.e., they do not have reactive groups that may polymerize into the polymer chain). Therefore, the fluorinated polyether preferably does not have reactive functional groups such as -COO⁻, -OH, -NH₂, -CONH₂, -SO₂O⁻. Typically, the fluorinated ethers do not have any functional groups other than the ether group(s). Further, the fluorinated polyether preferably does not comprise polymerizable terminal groups, such as, for example, -CF₂=CF₂ and the like. Preferably, the fluorinated polyethers do not interact with the actively growing polymer chain to generate radical species and/or terminate the polymer chain. Therefore, the fluorinated polyethers may be perfluorinated polyethers. In a particular embodiment the polyethers do not interact with the growing polymer chain to generate radical species and/or terminate the polymer chain at temperatures below 150 °C but may do so at temperatures above 250°C. Suitable polyethers of this kind typically contain one or more, preferably one, hydrogen atom, i.e. they are partially fluorinated polyethers.

In the present disclosure, the fluorinated polyether is preferably not miscible with water. In other words: the fluorinated polyether has a solubility in water of less than 1, 0.5, 0.25, 0.1, 0.05, 0.025, or even 0.01 % by weight (in distilled water at ambient conditions (25°C, 1 bar).

Suitable fluorinated polyethers include those having the general formula:

R_{f1}OR_{f2}OR_{f3}

wherein R_{f1}, R_{f2}, and R_{f3} may be identical or different and may be linear or branched, partially or fully fluorinated alkylene groups. Optionally, R_{f1}, R_{f2}, and/or R_{f3} may comprise catenary oxygen atoms (i.e., additional ether linkages). The fluorinated polyether of the present disclosure has at least 2, 3, 4, 5, 6, 7, 8, 9, or even 10 ether oxygen atoms. The fluorinated polyether optionally, may comprise other heteroatoms, such as, for example, nitrogen or sulfur. In one embodiment, R_{f1} is a linear alkylene group comprising 2 to 3 carbon atoms; R_{f2} is a linear or branched alkylene group comprising 2 to 6 carbon atoms; and R_{f3} is an alkylene group comprising 0 to 6 catenary oxygen atoms and wherein the alkylene group(s) comprises linear and/or branched alkylene groups.

In one embodiment, the fluorinated polyether is a perfluorinated ether having the general formula:

R_{f}-(OCF₂)ₓ-(OCF₂CF₂)_{y}-(OCF(CF₃)-CF₂)_{z}-(OCF(CF₃))ₐ-Q

wherein R_{f} is selected from perfluoroalkyl groups having from 1 to 10 carbon atoms; Q is selected from R_{f} or R'_{f}-(OCF₂)ₓ-(OCF₂CF₂)_{y}-(OCF(CF₃)-CF₂)_{z}-(OCF(CF₃))ₐ wherein R'_{f} may be selected from a perfluorinated alkyl group having 1 to 10 carbon atoms, R'_{f} may be the same or different than R_{f}; and wherein each x, y, z, and a is independently selected from 0 to 10, with the proviso that the sum of x+y+z+a is at least 1.

In another embodiment, the fluorinated polyether is a partially fluorinated liquid selected from the fluorinated ethers of the general formula:

R_{f}-(OC₃F₆)ₙ-O-CHFCF₂

wherein R_{f} is selected from a perfluorinated alkyl group having from 1 to 4 carbon atoms, and n is from 1 to 10.

In another embodiment, the fluorinated polyether is a partially fluorinated liquid selected from the fluorinated ethers of the general formula:

R_{f}-(OCF(CF₃)CF₂)ₙ-O-CFH-CF₂-O-R

wherein R_{f} may be selected from a perfluorinated alkyl group having from 1 to 10 carbon atoms, R may be selected from a partially or fully fluorinated alkyl group having from 1 to 10 carbon atoms. R may be the same or different than R_{f} and n is from 1 to 8.

In yet another embodiment, the fluorinated polyether comprises a derivative of hexafluoropropylene oxide, having, at least 1 repeating unit of -[(CF₃)CFCF₂O]-. Exemplary suitable fluorinated polyethers include, but are not limited to, CHF₂CF₂CF₂OCF(CF₃)CF₂OCFHCF₃; CHF₂CF₂CF₂OCF(CF₃)CF(CF₃)OCF₂CF₂CHF₂; CF₃CF₂CF₂OCF(CF₃)CF(CF₃)OCF₂CF₂CF₃; CF₃(OCF(CF₃)CF₂)ₙ(OCF2)ₘOCF₃ wherein n and m are independently 1, 2, 3, 4, 5, 6, 7, 8, 9, or 10 (such as the polyethers available under the trade designation "GALDEN" from Solvay Solexis S.p.A., Bollate, Italy); CF₃CF₂CF₂O[CF(CF₃)CF₂O]ₙCFXCF₃ wherein X is H, F, or CF₃ and n is 2, 3, 4, 5, 6, 7, 8, 9, or 10; (C₃F₇O[CF(CF₃)CF₂O]ₙCF(CF₃)-)₂ wherein n is 1, 2, 3, 4, or 5; (C₃F₇OCF(CF₃)CF₂OCF(CF₃)CF₂OCF(CF₃)-)₂; (C₃F₇OCF(CF₃)CF₂OCFHCF₂-)₂; C₃F₇OCFCF₃CF₂OCHFCF₂OCH₂CF₃; and F(CF₂CF₂CF₂O)ₙCF₂CF₃ wherein n is at least 2 (such as the perfluoropolyethers available under the trade designation "DEMNUM" from Daikin Industries, LTD., Osaka, Japan); F(CF(CF₃)CF₂O)ₙCF₂CF₃ wherein n is at least 2 (such as the perfluoropolyethers available under the trade designation "KRYTOX" from DuPont de Nemours Inc., Wilmington, Delaware, USA), and including all isomers and combinations thereof. The fluorinated polyethers identified by their chemical formulae hereinabove are considered non-telogenic. The preparation of various non-telogenic fluorinated polyethers has been described, for example in German Pat. Appl. No. DE 2 000 830 (Bristol et al.), and US Pat. Nos. 4,777,304 (Schweighardt et al.), 4,895,990 (Sargent et al.) and 4,686,024 (Sherer et al.); and in the following journals: Tetrahedron, 19, 1893 (1963); Journal of Fluorine Chemistry 65, 59 (1993); Journal of Fluorine Chemistry 55, 93 (1991); and Journal of Physical Chemistry 77, 2324 (1973). Nontelogenic fluorinated polyethers are also commercially available, for example, from 3M Co., St. Paul, MN, USA; Hoechst GmbH, Frankfurt, Germany; Solvay Solexis S.p.A., Bollate, Italy; Anles Ltd., St. Petersburg, Russia; Daikin Industries Ltd, Osaka, Japan; and DuPont de Nemours Inc., Wilmington, Delaware, USA.

In another embodiment, the polymerization of PTFE comprises a partially fluorinated polyether, in particular those described above, used in combination with a partially fluorinated emulsifier, in particular a partially fluorinated emulsifier as described below. The use of partially fluorinated emulsifiers in combination with the fluorinated polyether, in particular partially fluorinated polyethers, may advantageously quickly carrying away the locus (or center) of polymerization from the floating coagulum. In one embodiment, the fluorinated polyether has a molecular weight of less than 2000, 1500, 1000, 750, or even 500 grams/mole. Typically, the fluorinated polyether is selected to have a boiling point of at least 100°C, 150°C, or even 200°C; at most 175°C, 200°C, 225°C, 250°C, 275°C, 300°C, 325°C, or even 350°C. Typically the fluorinated polyether may be added undiluted (i.e., in pure form) into the reaction vessel in amount of at least 0.1, 0.2, 0.3, 0.5, 0.75, 1.0, 1.1, 1.2, 1.5, 2, 5, 10, 15, or even 20% by weight versus the amount of water used in the aqueous emulsion polymerization. The fluorinated polyether may be added to the reaction vessel prior to and/or during the polymerization. Generally, the fluorinated polyether may not be added as a microemulsion nor may it be added as preemulsion with small droplet sizes, such as those disclosed in EP Pat. No. 1245596 (Kaulbach et al.).

In the present disclosure, TFE (tetrafluoroethylene) is polymerized in an aqueous emulsion. The aqueous emulsion polymerization can be carried out by using TFE alone or TFE together with a comonomer, in an aqueous medium containing an emulsifier and a polymerization initiator. The PTFE of the present disclosure may be a homopolymer of TFE, or a copolymer of TFE (i.e., comprising interpolymerized monomeric units of TFE and at least one or more kinds of additional fluorinated monomers, referred to herein as fluorinated comonomers). The fluorinated comonomers used to prepare the PTFE should generally be kept low enough so as not to impair the overall non-melt processible characteristics of the PTFE. Accordingly, the total amount of the additional fluorinated comonomer(s) should typically not exceed 1%, 0.75%, or even 0.5% by weight based on the total weight of the PTFE.

The fluorinated comonomers include those having an ethylenically unsaturated group other than TFE, for example, a fluorinated C₃ to C₈ olefin, a fluorinated vinyl ether, or a fluorinated vinyl alcoxy ether. Exemplary fluorinated comonomer include: fluorinated C₃ to C₈ olefin such as hexafluoropropylene, perfluorobutene-1, perfluorohexene-1, perfluorononene-1, (perfluoromethyl)ethylene, (perfluorobutyl)ethylene, vinylidene fluoride, and chlorotrifluoroethylene; perfluorovinyl ethers such as perfluoro(methyl vinyl ether), perfluoro(ethyl vinyl ether), perfluoro(propyl vinyl ether), and perfluoro(heptyl vinyl ether); perfluorovinyl alcoxy ethers, such as perfluoro-2-propoxypropyl vinyl ether, perfluoro-2-methoxy-ethylvinyl ether, and perfluoro-3-methoxy-1-propylvinyl ether; and combinations thereof.

Conventional ultra-high molecular weight PTFE has a high melt viscosity and does not easily flow at the melting temperature, and thus, it has a non-melt fabricable quality. Accordingly, this PTFE is usually subjected to paste extruded molding, wherein the PTFE is blended with a lubricant, molded by extrusion, then the lubricant is removed, and the extruded product thereby obtained is usually fused (sintered) at a temperature higher than the melting point of the PTFE and/or formed into the shape of a final product.

In one embodiment, the PTFE of the present disclosure has an extrusion pressure at reduction ratio of 100 (according to DIN EN ISO 12086) of less than 40 MPa, 30 MPa, 25 MPa, 20 MPa, or even 15 MPa; and/or more than 5 MPa, 7 MPa, or even 10 MPa.

The PTFE of the present disclosure may have high stretchability, measured, for example, by its elongation at break. The PTFE may have an elongation at break of greater than 700%. Elongation at break may be measured on tensile testers. Typically, 100µm thick films may be subjected to 50mm elongation per minute at ambient conditions (25°C). The time and pressure at which the sample breaks are recorded. The PTFE may have a fibrillated character, and a non-melt-fabricable quality. These properties are properties that are usually required for paste extruded molding.

When the at least one perfluorinated polymer is a perfluorinated ionomer, it is preferred that the perfluorinated ionomers comprise acid moieties in side chains, preferably selected from carboxylic acid moieties and/or sulfonic acid moieties.

The composition according to the present disclosure comprises at least one radical scavenger selected from (i) organic radical scavengers and (ii) inorganic radical scavengers selected from iodides or bromides of alkalines or earth alkalines. Regarding the amount of the at least one radical scavenger as used herein, it was found that amounts of less than 0.5 wt.-% did not give reproducible and acceptable results. Thus, the composition according to the present disclosure comprises at least 0.5 wt.-% of at least one radical scavenger. Preferably, the composition as described herein comprises at least 1 wt.-%, preferably at least 2.5 wt.-%, and more preferably at least 5 wt.-% of at least one radical scavenger, based on the total weight of the composition. It is preferred that the organic radical scavenger is selected from phenolic radical scavengers, quinones, tocopherols, hindered amines, stable radicals, and organic acids. In this regards, it is preferred that the organic radical scavenger is selected from phenolic radical scavengers, preferably 2,6-Di-tert-butyl-4-methylphenol and/or 2-tert-butyl-4-methoxyphenol, hindered amines, stable radicals, preferably (2,2,6,6-Tetramethylpiperidin-1-yl)oxyl, and organic acids, preferably ascorbic acid.

Common perfluorinated polymer compositions oftentimes further comprise at least one filler. Accordingly, it is preferred that the composition according to the present disclosure further comprising at least one filler, preferably at least one reinforcing filler material. Filler materials in general and reinforcing filler materials for perfluorinated polymer compositions are well-established in the art and well-known to the skilled person. The at least one filler may be selected in accordance with the desired property profile of the polymer composition, dependent on its application or use. The at least one filler may be selected from inorganic or organic fibers and/or particles. Preferably, the at least one filler is selected from carbon black, mineral fillers, intumescent inorganic fillers, silica, titanium dioxide, glass fibers, glass particles, glass spheres, ceramic fibers, ceramic fibers, and/or carbon fibers.

In one preferred embodiment of the present disclosure, the composition comprises
(a) at least one perfluorinated elastomer comprising trifluorovinylether (TFE) and at least one of a perfluoroalkoxyvinylether (PAVE) or perfluoroalkoxyallylether (PAAE);
(b) at least 5 wt.-% of a radical scavenger selected from organic radical scavengers, preferably is 2,6-Di-tert-butyl-4-methylphenol or 2-tert-butyl-4-methoxyphenol; and
(c) at least one reinforcing filler material.

In another preferred embodiment of the present disclosure, the composition comprises
(a) a perfluorinated thermoplast comprising polytetrafluoroethylene (PTFE), perfluoroalkoxyalkanes (PFA) and/or tetrafluoroethylene-hexyfluoropropylene (FEP);
(b) at least 5 wt.-% of a radical scavenger selected from organic radical scavengers, preferably is 2,6-Di-tert-butyl-4-methylphenol or 2-tert-butyl-4-methoxyphenol; and
(c) at least one reinforcing filler material.

In yet another preferred embodiment of the present disclosure, the composition comprises
(a) at least one perfluorinated ionomer;
(b) at least 5 wt.-% of a radical scavenger selected from organic radical scavengers, preferably is 2,6-Di-tert-butyl-4-methylphenol or 2-tert-butyl-4-methoxyphenol; and
(c) at least one reinforcing filler material.

Furthermore, the compositions as described herein may further comprise at least one of a curable component and a crosslinker. Curable components and crosslinkers suitable for use in perfluorinated polymer compositions are well-known to the skilled person and may be selected in accordance with the requirements of the respective application of the perfluorinated polymer.

The present disclosure further provides a method for processing a perfluorinate composition, comprising the following steps:
I. adding at least one radical scavenger selected from (i) organic radical scavengers and (ii) inorganic radical scavengers selected from iodides or bromides of alkalines or earth alkalines to a perfluorinated polymer to form a stabilized composition; and
II. processing the stabilized composition,
wherein the total amount of C3 to C14 perfluorinated carboxylic acid in the processed stabilized composition is no greater than 500 ppb.

Herein, the at least one radical scavengers as well as the perfluorinated polymers are the same as already discussed in conjunction with the composition according to the present disclosure. In particular, it is preferred that the stabilized composition least 1 wt.-%, preferably at least 2.5 wt.-%, and more preferably at least 5 wt.-% of at least one radical scavenger, based on the total weight of the composition. Furthermore, it is preferred that the total amount of C3 to C14 perfluorinated carboxylic acid in the processed stabilized composition is no greater than 400 ppb, preferably no greater than 300 ppb, and more preferably no greater than 200 ppb.

Processing the stabilized composition in step II. typically involves applying shear forces to the polymer composition. This is often the case during compounding, milling, extruding, injection molding and the like. During these processes, due to the high shear forces involved, perfluorinated carboxylic acids are generated, which in the methods according to the present disclosure is avoided or mitigated because of the use of the at least one radical scavenger.

Accordingly, it is preferred that processing in step (II) of the method according to the present disclosure comprises grinding, in particular cryogenic grinding, extruding such as twin screw extruding, mixing such as two roll mixing, internal mixing and mixing bowl, grinding, and/or injection molding. In another preferred embodiment, processing of the stabilized composition in step (II) of the method as described herein comprises kryogrinding, extraction of the composition with at least one organic solvent, and determination of perfluorinated carboxylic acids in the extracted solution.

### Examples

The present disclosure is further described without however wanting to limit the disclosure thereto. The following examples are provided to illustrate certain embodiments but are not meant to be limited in any way. Prior to that some test methods used to characterize materials and their properties will be described. All parts and percentages are by weight unless otherwise indicated.

### Test Methods

The general procedures described in "3M Standard Method for PFAS in Articles of Commerce, Edition 1, 02 June 2020", including the test and analytical equipment, was followed. The disclosure of this document is incorporated herein by reference in its entirety. In particular, reference is made with regard to the experimental and analytical setup and methods used in the present disclosure to the chapter "Part 3: Instrumental Analysis", 3.1.1 "Analytical Equipment and Materials" as well as 3.1.2 "HPLC Conditions (exemplary)".

### Liquid Chromatography - mass spectrometrie (LC-MS):

The submitted samples were dissolved in methanol prior to analysis. Standard solutions were prepared from an aqueous solution of Adona that was determined to have a concentration of 28.36% by NMR.

| | |
|---|---|
| Instrument: | Agilent 6470 Triple Quad LCMS MAID 1665 |
| Column: | Thermo Scientific BetaSil C8 or C18, reverse phase column, 4.6 x 150 mm, 5 micrometer |
| Solvent A: | Aqueous 2mM ammonium acetate |
| Solvent B: | Acetonitrile |
| Gradient: | 75% B to 100% B at 4 minutes |
| Injection: | 2 µL |
| Col. Temp: | 25 °C |
| Flow Rate: | 0.75 mL/min |
| MS: | Negative electrospray |

### Materials used:

| | |
|---|---|
| PFE 191T | Perfluoroelastomer from 3M Dyneon GmbH, Germany |
| PFE 7301 BZ | Perfluoroelastomer from 3M Dyneon GmbH, Germany |
| PFA 6502TZ | Fully fluorinated copolymer from tetrafluoroethylene and perfluorovinylether from 3M Dyneon GmbH, Germany |
| TFM 1600 | Modified PTFE from 3M Dyneon GmbH, Germany |
| PFA 8506 TAZ | Fluoroplastic from 3M Dyneon GmbH, Germany |
| BHT | 2,6-Di-tert-butyl-4-methylphenol from Sigma Aldrich |

### Perfluorinated elastomes, cryogenic grinding

In this study the inhibition effect of radical scavengers on the generation of perfluorinated carboxylic acids during cryogenic grinding of PFE and PFE compounds was investigated. As example 1, PTFE 191 plus 10 wt.-% BHT as radical scavenger was used. The amount of BHT was added as a powder to the gum in the milling container. Comparative Example 1 was PTFE 191 without BHT or any other radical scavengers.

The grinding of the polymer or compound samples was either run on a Spex mill under the following conditions:
Spex mill:
3 cycles
5 min milling time
3 min in-between cooling (liquid nitrogen)
15 Hz

The perfluorinated carboxylic acids were determined by extraction of the grinded material with MeOH and subsequent LC/MS measurements. The results are summarized in table 1.

**Table 1. Radical scavenger study on the influence of BHT during cryogenic grinding in Ex. 1 and Comp. Ex. 1 on the Spex mill.**

| **Composition:** | **Sum C3-C7** | **C8** | **Sum C9-C14** |
|---|---|---|---|
| Comp. Ex. 1 | 30443 ppb | 4780 ppb | 18437 ppb |
| Ex. 1 | 26 ppb | 3 ppb | 116 ppb |

The use of BHT as a radical scavenger lowers the PFOA formation within three orders of magnitude and inhibits the synthetic generation of PFOA during the grinding and gives a realistic result of the actual PFOA content of the sample.

As Example 2, PFE 7301BZ plus 10 wt.-% BHT as radical scavenger was investigated. Comparative Example 2 was PFE 7301 BZ without any radical scavenger.

**Table 2. Radical scavenger study on the influence of BHT during cryogenic grinding of Ex. 2 and Comp. Ex. 2.**

| **Composition:** | **Sum C3-C7** | **C8** | **Sum C9-C14** |
|---|---|---|---|
| Comp. Ex. 2 | 36467 ppb | 3409 ppb | 12103 ppb |
| Ex. 2 | 78 ppb | 11 ppb | 94 ppb |

Again, the use of a radical scavenger prevents the formation of synthetically formed PFOA.

### Cryogenic grinding of crystalline perfluorinated polymers

In this study the inhibition effect of radical scavengers on the generation of perfluorinated carboxylic acids during cryogenic grinding of crystalline fluoropolymers was investigated. The polymers were grinded on a Spex or Retsch mill under the addition of BHT (2,6-Di-tert-butyl-4-methylphenol; CAS 128-37-0). The BHT was added as a powder to the polymer in the milling tube.

**Table 3. Milling conditions.**

| | |
|---|---|
| Retsch mill: | Spex mill: |
| 5 cycles | 3 cycles |
| 2 min milling time | 5 min milling time |
| 2 min in-between cooling (liquid nitrogen) | 3 min in-between cooling (liquid nitrogen) |
| 30 Hz | 15 Hz |

Perfluorinated carboxylic acids were extracted with MeOH and determined by LC/MS measurements as published in the 3M Standard test method for the determination of PFOA in articles of commerce.

As a crystalline fluoropolymer PFA6502TZ and TFM 1600 are exemplarily investigated towards the inhibition effect of BHT during the cryogrinding. Herein, PFA6502TZ and TFM 1600 without any radical scavengers were employed as comp. ex. 3 and comp. ex. 4, respectively. PFA6502TZ plus 10 wt.-% BHT was used as ex. 3, and TFM 1600 plus 10 wt.-% BHT was used as ex. 4.

**Table 4. Radical scavenger study on the influence of BHT during cryogenic grinding of crystalline fluoropolymers on the Spex mill.**

| **Composition:** | **Mill type:** | **Sum C3-C7** | **C8** | **Sum C9-C14** |
|---|---|---|---|---|
| Comp. Ex. 3 | Spex | 725 ppb | 2 ppb | 17 ppb |
| Ex. 3 | Spex | 39 ppb | 1,6 ppb | 10 ppb |
| Comp. Ex. 4 | Spex | 1010 ppb | 4 ppb | 25 ppb |
| Ex. 4 | Spex | 248 ppb | 4 ppb | 41 ppb |

The analysis of the obtained results show only minor differences in the PFOA amounts, however the formation of C3-C7 Perfluorocarboxylic acids is reduced by a factor of 18. The differences in the C3-C7 in comparison to C8 and C9-C14 depends on the polymer structure and the possibility of chain scissions on the weaker points of the polymer chain. Overall, it can be assumed that BHT or similar radical scavengers inhibit the synthetic generation of these PFAS during the grinding and give a realistic result of the actual content of the sample.

Furthermore, the Terpolymer PFA8506TAZ was investigated in regards to the PFOA content in the polymer sample. PFA8506TAZ without any radical scavengers was used as comp. ex. 5, whereas PFA8506TAZ with 10 wt.-% BHT was used as ex. 5.

**Table 5. Radical scavenger study on the influence of BHT during cryogenic grinding of ex. 5 and comp. ex. 5 on the Retsch mill.**

| **Composition:** | **Mill type:** | **C8** |
|---|---|---|
| Comp. ex. 5 | Retsch | 39 ppb |
| Ex. 5 | Retsch | 1.5 ppb |

The addition of BHT inhibits the synthetic generation of PFAS in the Terpolymer and eliminates possible inconsistencies due to different shear forces that are applied.

## Claims

1. A composition comprising
(a) at least one perfluorinated polymer;
(b) at least 0.5 wt.-% of at least one radical scavenger selected from (i) organic radical scavengers and (ii) inorganic radical scavengers selected from iodides or bromides of alkalines or earth alkalines, based on the total weight of the composition.

2. The composition according to claim 1, wherein the perfluorinated polymer is
selected from perfluorinated elastomers, perfluorinated thermoplasts, and perfluorinated ionomers.

3. The composition according to claim 1 or claim 2, wherein the perfluorinated
polymer is selected from trifluorovinyl ether (TFE), perfluoroalkoxyvinylethers (PAVE), perfluoroalkoxyallylethers (PAAE), and any combinations and mixtures thereof.

4. The composition according to claim 2, wherein the perfluorinated elastomer
is selected from perfluorinated rubbers.

5. The composition according to claim 2, wherein the perfluorinated thermoplast
is selected from perfluoroalkoxyalkanes (PFA), tetrafluoroethylene-hexyfluoropropylene (FEP), polytetrafluoroethylene (PTFE) optionally modified with vinyl ethers.

6. The composition according to any one of the preceding claims, comprising at
least 1 wt.-%, preferably at least 2.5 wt.-%, and more preferably at least 5 wt.-% of at least one radical scavenger, based on the total weight of the composition.

7. The composition according to any one of the preceding claims, wherein the
organic radical scavenger is selected from phenolic radical scavengers, quinones, tocopherols, hindered amines, stable radicals, and organic acids.

8. The composition according to claim 7, wherein the organic radical scavenger
is selected from phenolic radical scavengers, preferably 2,6-Di-tert-butyl-4-methylphenol and/or 2-tert-butyl-4-methoxyphenol, hindered amines, stable radicals, preferably (2,2,6,6-Tetramethylpiperidin-1-yl)oxyl, and organic acids, preferably ascorbic acid.

9. The composition according to any one of the preceding claims, further
comprising at least one filler.

10. The composition according to any one of claims 1 to 3 and 6 to 9, comprising
(a) at least one perfluorinated elastomer comprising trifluorovinylether (TFE) and at least one of a perfluoroalkoxyvinylether (PAVE) or perfluoroalkoxyallylether (PAAE);
(b) at least 5 wt.-% of a radical scavenger selected from organic radical scavengers, preferably is 2,6-Di-tert-butyl-4-methylphenol or 2-tert-butyl-4-methoxyphenol; and
(c) at least one reinforcing filler material.

11. A method for processing a perfluorinate composition, comprising
I. adding at least one radical scavenger selected from (i) organic radical scavengers and (ii) inorganic radical scavengers selected from iodides or bromides of alkalines or earth alkalines to a perfluorinated polymer to form a stabilized composition; and
II. processing the stabilized composition,
wherein the total amount of C3 to C14 perfluorinated carboxylic acid in the processed stabilized composition is no greater than 500 ppb.

12. The method according to claim 11, wherein the total amount of C3 to C14 perfluorinated carboxylic acid in the processed stabilized composition is no greater than 400 ppb, preferably no greater than 300 ppb, and more preferably no greater than 200 ppb.

13. The method according to claim 11 or claim 12, wherein processing comprises grinding, in particular cryogenic grinding, extruding such as twin screw extruding, mixing such as two roll mixing, internal mixing and mixing bowl, grinding, and/or injection molding.

14. The method according to any one of claims 11 to 13, wherein the stabilized composition least 1 wt.-%, preferably at least 2.5 wt.-%, and more preferably at least 5 wt.-% of at least one radical scavenger, based on the total weight of the composition.

15. Use of the composition according to any one of claims 1 to 10 for the reduction of perfluorinated carboxylic acids during processing of perfluorinated polymers.
